Europäisches Patentamt

European Patent Office

Office européen des brevets

(11) Veröffentlichungsnummer: **0 057 826**

**B1**

(12) # EUROPÄISCHE PATENTSCHRIFT

(45) Veröffentlichungstag der Patentschrift:
15.10.86

(51) Int. Cl.⁴: **H 04 N 5/14, H 04 N 7/04**

(21) Anmeldenummer: **82100286.2**

(22) Anmeldetag: **16.01.82**

(54) Verfahren zum Übertragen von Fernsehsignalen über einen genormten bandbreitebegrenzten Ubertragunskanal und Anordnung zum Durchführen des Verfahrens.

(30) Priorität: **05.02.81 DE 3103906**

(43) Veröffentlichungstag der Anmeldung:
**18.08.82 Patentblatt 82/33**

(45) Bekanntmachung des Hinweises auf die Patenterteilung:
**15.10.86 Patentblatt 86/42**

(84) Benannte Vertragsstaaten:
**DE FR GB NL**

(56) Entgegenhaltungen:
DE-B-2 543 057

NTG-FACHBERICHTE, Band 74, September 1980,
Seiten 407-416, Berlin, DE, B. WENDLAND:
"Konzepte für ein kampatibles HiFi-
Fernsehsystem"
NACHRICHTENTECHNISCHE ZEITSCHRIFT, Band
30, Nr. 3, März 1977, Seiten 223-225, Berlin, DE, J.
OST: "Zeilennormwandler in einem Video-
Kommunikationssystem"
PROCEEDINGS OF IEEE, Band 68, Nr. 3, März 1980,
Seiten 366-406, New York, US, A.N. NETRAVALI et
al.: "Picture coding: a review"
SMPTE, WINTER CONFERENCE, 6-7. Februar 1981,
TV technology in the 80's, Seiten 151-165,
Scarsdale, US, B. WENDLAND: "High definition
television studies on compatible basis with present
standards"

(73) Patentinhaber: **ANT Nachrichtentechnik GmbH,
Gerberstrasse 33, D-7150 Backnang (DE)**

(72) Erfinder: **Broder, Wendland, Prof. Dr.- Ing., Am
Stadtgarten 58, D-4355 Waltrop (DE)**
Erfinder: **Schröder, Hartmut, Dr.- Ing., Weisse
Taube 30, D-4600 Dortmund (DE)**

(74) Vertreter: **Schickle, Gerhard, Dipl.- Ing., ANT
Nachrichtentechnik GmbH Patent- und
Lizenzabteilung Gerberstrasse 33, D-7150
Backnang (DE)**

# 0 057 826

**Beschreibung**

Die Erfindung betrifft ein Verfahren zum Übertragen von Fernsehsignalen gemäß Oberbegriff des Patentanspruchs 1 und eine Anordnung zum Durchführen des Verfahrens. Das Verfahren gemäß Oberbegriff des Patentanspruchs 1 ist aus NTG Fachberichte, Band 74, 1980, Seite 407—416, bekannt.

Derzeitige Fernsehübertragungssysteme sind in Bezug auf die Wiedergabequalität der übertragenen Bilder nicht ideal. Die Mängel sind:

— mäßige Detailauflösung, insbesondere in vertikaler Richtung,
— 50 Hz-Großflächenflimmern bei großer Bildschirmhelligkeit,
— störendes Zeilenflimmern und Zeilenwandern,
— 25 Hz-Flackern an horizontalen Konturen,
— Croßcolour-Störungen,
— störende Zeilenstruktur.

Neue Systemanwendungen wie Videotext, Bildschirmtext, Festbildübertragung, Heimterminal usw. lassen gerade diese Mängel verstärkt hervortreten. So sind Fernsehraster-Displays für "Computer Graphics" oder für "Information Retrieval" usw. nahezu ungeeignet. Ein einheitliche Display-Technik ist für zukünftige Systeme wünschenswert. Für Großbilddarstellungen, beispielsweise mit großen Projekteinrichtungen oder großen Flachdisplays, wird eine erhöhte Detailauflösung in allen Richtungen gefordert.

Aus der Veröffentlichung "Entwicklungsalternativen für zukünftige Fernsehsystem", Fernseh- und Kino-Technik, 34. Jahrgang, Nr. 2/1980, S. 41 bis 48, sind Übertragungsverfahren bekannt mit erhöhter Zeilenzahl, erhöhter Bandbreite und ebenso erhöhtem Bedarf an Übertragungskapazität. In vorgenannter Veröffenlichung wird gezeigt, daß eine kompatible Auflösungserhöhung durch zeitdiskrete Signalverarbeitung in Verbindung mit digitalen Speichertechniken erreichbar ist und eine Flimmerreduktion durch Vollbilddarstellung (ohne Zeilensprung).

Aus der Veröffentlichung "Verbesserung der Bildschärfe eines bandbegrenzten Fernsehsignals durch lineare Maßnahmen", Siemens Forschungs- und Entwicklungs-Berichte, Band 5 (1976), Nr. 2, S. 57 bis 60, ist ein Übertragungsverfahren bekannt geworden, das eine signalanhebende Filterung des Bildsignals verwendet, wobei eine im Sinne von Bildschärfe und störendem Überschwingen optimale Bildqualität erreicht werden kann.

Aus der Veröffentlichung "Konzepte für ein kompatibles HiFi-Fernsehsystem", NTG Fachberichte, Band 74, Text- und Bildkommunikation, Sept. 1980, S. 407—416, VDE-Verlag, ist ein hochzeiliges Bildübertragungssystem mit Punktrastersynthese und Vollbildauslesung bekannt, wobei das mit 1250 Zeilen aufgenommene Bildsignal planar signalanhebend gefiltert und bandbegrenzt wird und im Zeilensprungverfahren abgetastet und übertragen wird. Am Empfangsmonitor kann eine Vollbilddarstellung ohne 25 Hz-Filmmern an horizontalen Konturen erfolgen, so daß bei günstiger Vertikalfilterung subjektiv eine Verbesserung der Vertikalauflösung erreicht wird.

Aufgabe der Erfindung ist es, ein Verfahren gemäß dem Oberbegriff des Patentanspruchs 1 anzugeben, welches eine fehlerfreie Bildabtastung und eine zeilenfreie Rekonstruktion bei Übertragung über einen genormten Übertragungskanal ermöglicht und zu einer erhöhten Detailauflösung führt. Außerdem soll eine Anordnung zum Durchführen dieses Verfahrens angegeben werden.

Erfindungsgemäß wird diese Aufgabe bezüglich des Verfahrens durch die Merkmale des Patentanspruchs 1 gelöst. Anspruch 6 zeigt eine Anordnung zum Durchführen des Verfahrens auf.

In den Unteransprüche sind vorteilhafte Weiterbildungen des erfindungsgemäßen Verfahrens angegeben.

Ein Vorteil des Verfahrens nach der Erfindung ergibt sich insbesondere dadurch, daß es gegenüber den bisher vorgeschlagenen HDTV-Systemen (High Definition Television) bei Übertragung in analoger Form kompatibel zu bisherigen Fernsehübertragungssystemen ist, d.h. ein Empfang mit bisherigen TV-Empfängern ist möglich.

Anhand der Zeichnungen wird die Erfindung nun näher erläuter. Dabei zeigt

Fig. 1a das Bildübertragungssystem,
Fig. 1b die Vollbildabtastung ohne Zeilensprung bei Kamera und Monitor,
Fig. 2a das zweidimensionale Fourierspektrum des abgetasteten Bildsignals,
Fig. 2b die zugehörige Übertragungsfunktion $H(f^x)$,
Fig. 2c das periodische Spektrum des Bildsignals $B(f^x=O, f^y)$,
Fig. 3a das Fourierspektrum des übertragenen Bildsignals
Fig. 3b die Spektren des Bildsignals $B(f^x=O, f^y)$ und der Modulationsübergangsfunktion $H_M(f^x, f^y)$ des Monitors,
Fig. 4a das zweidimensionale Fourierspektrum für "aliasingfreie" Abtastung und zeilenfreie Wiedertabe,
Fig. 4b das Spektrum nach zweidimensionaler Filterung und Abtastwandlung auf 625 Zeilennorm,
Fig. 4c das Spektrum nach der Übertragung,
Fig. 4d das Spektrum nach Filterung und Abtastumsetzung in 1250 Zeilen,
Fig. 5a die Übertragungsfunktion $H(f)$ eines Bildübertragungskanals ohne Abtastung,
Fig. 5b die Übertragungsfunktion mit Signalabtastung,

2

Fig. 6 das Bildübertragungssystem mit zeilenfreier Wiedergabe,
Fig. 7a die Orthogonalabtastung,
Fig. 7b das zweidimensionale Fourierspektrum der Orthogonalabtastung in x- und y-Richtung,
Fig. 8a die Abtastung in Offsetlage,
Fig. 8b das Fourierspektrum der Offsetabtastung,
Fig. 8c das Fourierspektrum der Offsetabtastung mit Bandbegrenzung,
Fig. 9a das Fourierspektrum bei optimal gewählter Abtastfrequenz (kameraseitig, 1250 Zeilen),
Fig. 9b das Fourierspektrum bei optimal gewählter Abtastfrequenz (senderseitig, 625 Zeilen),
Fig. 9c das Fourierspektrum bie optimal gewählter Abtastfrequenz (empfängerseitig, 625 Zeilen),
Fig. 9d das Fourierspektrum bei optimal gewählter Abtastfrequenz (monitorseitig, 1250 Zeilen),
Fig. 10a die Punktrasterdarstellung vor senderseitiger planarer Filterung,
Fig. 10b die Punktrasterdarstellung nach senderseitiger planarer Filterung und Abtastwandlung mit Zeilensprung,
Fig. 10c den prinzipiellen Aufbau des planaren Vorfilters,
Fig. 11 die planare Nachfilterung mit Abtastwandlung für zeilenfreie Bildwiedergabe mit Offsetabtastung.

Zunächst sollen einige Voraussetzungen erklärt werden, auf denen die Erfindung basiert.

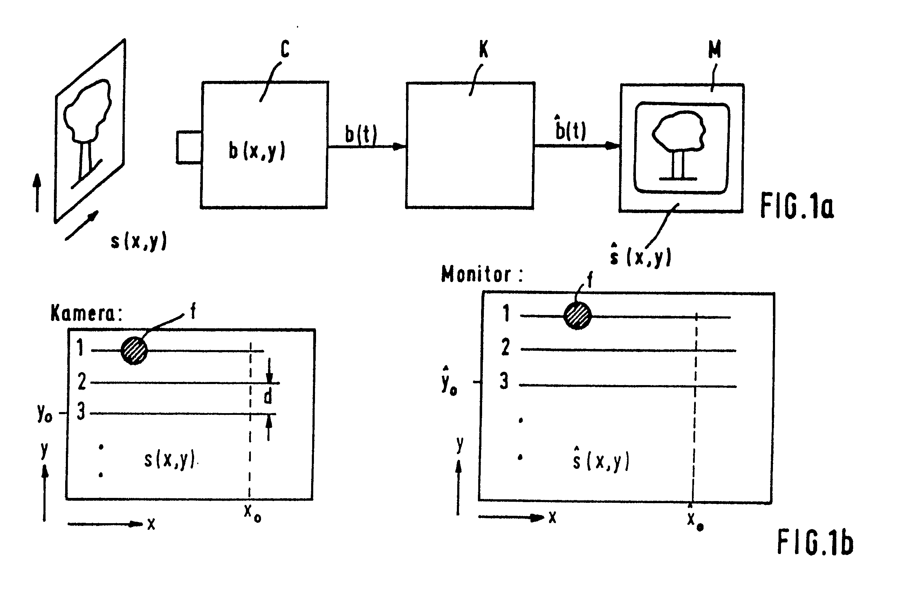

Es wird ein Bildabtastverfahren abgeleitet, das von dem Bildübertragungssystem abhängt, wie es in Fig. 1 dargestellt ist. Ein Bild mit der Leuchtdichtefunktion $s(x,y)$ wird in ein Bildsignal $b(x,y)$ der Aufnahmekamera C umgewandelt und anschließend abgetastet, wobei das Videosignal $b(t)$ entsteht. Das Videosignal $b(t)$ wird über den Übertragungskanal K mit der Übertragungsfunktion $H(f)$ übertragen. Es entsteht hinter dem Übertragungskanal ein Signal $\bar{b}(t)$ als Videosignal am Empfängereingang. Das rekonstruierte Leuchtdichtesignal $\hat{s}(x, y)$ des Bildes auf dem Monitorschirm des Monitors M wird zeilenweise aus dem empfangenen Videosignal $\bar{b}(t)$ gewonnen.

Zur Vereinfachung werden nun folgende Voraussetzungen getroffen:

(1) Es wird eine Kamera C und ein Monitor M mit Vollbildabtastung ohne Zeilensprung verwendet (dieses Abtastverfahren in x- und y-Richtung ist mit einem symbolischen Abtaststrahl f in Fig. 1b dargestellt),
(2) die Bildumsetzung von der optischen Leuchtdichte $s(x,y)$ in das elektrische Bildsignal $b(x,y)$ ist linear,
(3) die zweidimensionale planare Impulsantwort $h_c(x,y)$ der Kamera ist für die gesamte Bildfläche gleich,
(4) die planare Impulsantwort $h_c(x,y)$ der Kamera kann in zwei voneinander unabhängige Teile $h_x(x)$ und $h_y(y)$ aufgespalten werden, wobei gilt:

$$h_x(x) \cdot h_y(y) = h_c(x,y).$$

Bekanntlich wird bei den meisten TV-Systemen das Zeilensprungverfahren im Verhältnis 2:1 angewendet, was der Annahme (1) widerspricht. Jedoch kann bei Anwendung der Bildspeicherung eine Kamera mit Zeilensprungabtastung verwendet werden. In diesem Fall muß die Bildspeicherauslesung kontinuierlich erfolgen. Bei Verwendung einer Kamera mit Zeilensprungabtastung und Bildspeicherung treten Probleme mit den "Aliasing"-Komponenten (Moiré) bei bewegten Bildern auf. Für optimale Bildqualität ist der Vollbildabtastung ohne Zeilensprung der Vorzug zu geben.

In jedem Fall kann ein Sendesignal mit Zeilensprung erhalten werden durch eine geeignete zu den bisher gebräuchlichen Empfängern kompatible Abtastumsetzung.

Mit dem vorgenannten Annahmen (1) bis (4) erhält man für jeden Punkt mit den Koordinaten $(x,y)$ für das ortsabhängige Bildsignal der Kameraaufnahmeröhre:

$$b(x,y) = \int_{-\infty}^{+\infty} \left( \int_{-\infty}^{+\infty} s(\xi,\eta) \cdot h_c(\xi-x, \eta-y)d\xi \right)d\eta$$

$$= \int_{-\infty}^{+\infty} \left( \int_{-\infty}^{+\infty} s(\xi,\eta) \cdot h_x(\xi-x)d\xi \right) \cdot h_y(\eta-y)d\eta$$

$$(1)$$

$$b(x,y) = \int_{-\infty}^{+\infty} \bar{s}(x, \eta) \cdot h_y(\eta-y)d\eta$$

mit $s(x,y)$ als Bildsignalquelle und $h_c(x,y) = h_x(x) \cdot h_y(y)$ als planar Impulsantwort der Kamera C unter Berücksichtigung der Modulationsübertragungsfunktion MTF des optischen Systems und des abgetasteten Bildpunktes f.

Bis diskreter Zeilenabtastung nach Fig. 1 gilt für die i-te Zeile bei $y_o$ ($y_o = (n-i) \cdot d = k \cdot d$ mit dem Zeilenabstand d):

$$b(x,y_o)=b(x, k \cdot d)= \int_{-\infty}^{+\infty} \bar{s}(x,\eta) \cdot h_y(\eta-k \cdot d)d\eta. \qquad (2)$$

Mit der Impulsantwort h(y) eines günstig gewählten Netzwerks, für das

$$h(y)=h_y(-y) \qquad (3)$$

gilt, erhält man das Faltungsintegral

$$b(x, k \cdot d)= \int_{-\infty}^{+\infty} \bar{s}(x,\eta) \cdot h(k \cdot d-\eta)d\eta$$

$$=\bar{s}(x,y) * h(k-d). \qquad (4)$$

Mit der Delta-Impulsfolge

$$\text{Ш}_d(y)=\sum^{+\infty} \cdot \delta(y-k \cdot d)$$

und Gleichung (4) erhält man die gewichtete Delta-Impulsfolge

$$b(x,y) \cdot \text{Ш}_d(y)=(\bar{s}(x,y) * h(y)) \cdot \text{Ш}_d(y) \qquad (5)$$

mit den Raumfrequenzen $f^x$, $f^y$ in x- oder y-Richtung und der Abtastfrequenz $f^y_s=1/d$ leitet sich aus Gleichung (5) das Fourierspektrum ab:

$$B(f^x,f^y)=(\bar{S}(f^x,f^y) \cdot H(f^y)) * \text{Ш}\ f^y_s(f^y). \qquad (6)$$

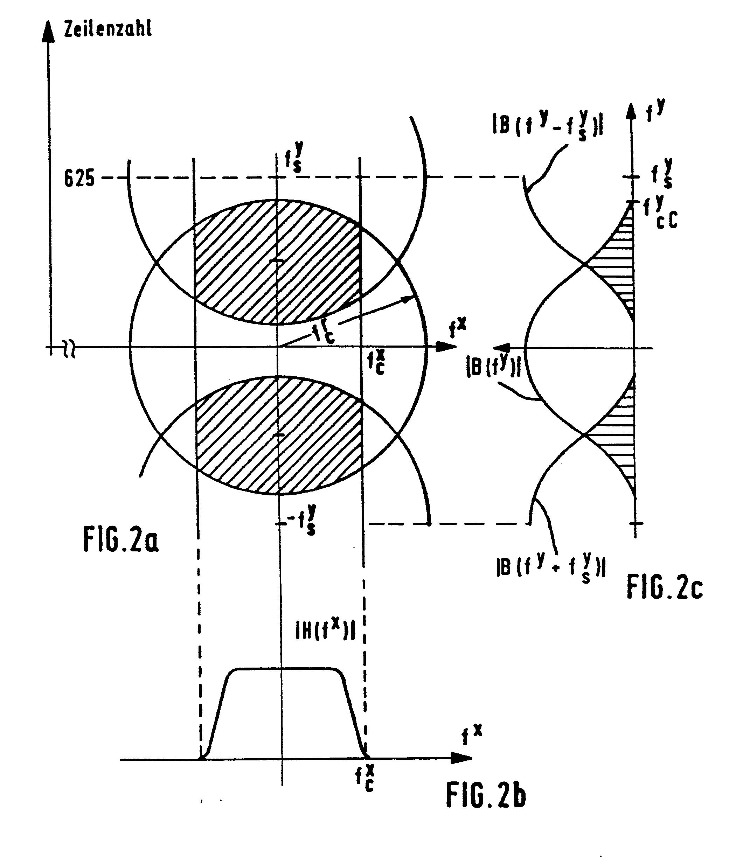

Dieses zweidimensionale Fourierspektrum, das in Fig. 2a dargestellt ist, ist periodisch in y-Richtung mit der Periodizität $f^y_s$. Man kann $f^y_s$ als Abtastfrequenz in vertikaler Richtung interpretieren. Eine passende Bandbegrenzung mit der vollständigen Übertragungsfunktion H($f^x$) kann durch ein Tiefpaßnetzwerk in der Kamera realisiert werden, in vertikaler Richtung dagegen ist die Übertragungsfunktion nur gegeben durch die optischen Linsen und die Abtaststrahlapertur. Dadurch und unter der Bedingung zirkularer Grenzfrequenzen $f^c_c$ der Kameraübertragungsfunktion $H_c(f^x, f^y)$, erhält man "Aliasing"-Komponenten (Fehler, die sich durch zu niedrig gewählte Abtastraten ergeben) in den schraffierten Bereichen der Fig. 2a, in der das zweidimensionale Fourierspektrum bei Vollbildabtastung dargestellt ist.

In Fig. 2b ist der Betrag der Übertragungsfunktion H($f^y$) dargestellt mit der Grenzfrequenz $f^x_c$.

Fig. 2c zeigt das periodische Spektrum des Bildsignals (B($f^x,f^y$) für x=o. In den schraffierten Gebieten tritt "Aliasing" auf durch Überlagerung der periodischen Spektren. Dieser bekannte Effekt bewirkt eine Verschlechterung der Vertikalauflösung, hervorgerufen durch störende "Aliasing"-Komponenten.

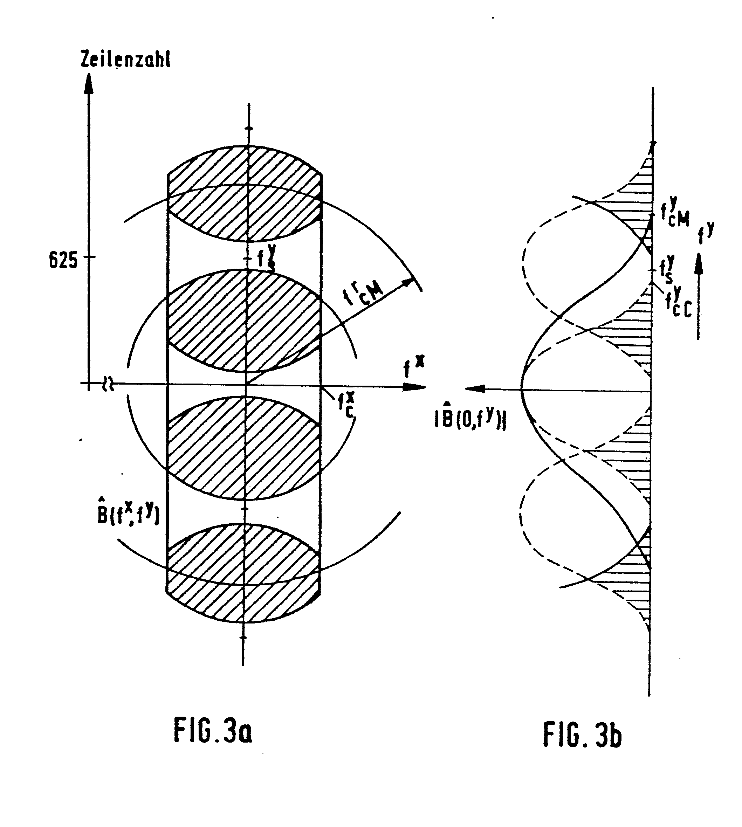

In Fig. 3a ist das Fourierspektrum B($f^x,f^y$) des übertragenen Bildsignals b(t) dargestellt.

In Fig. 3b ist das Spektrum des übertragenen Bildsignals und die Modulationsübergangsfunktion $H_M(f^x,f^y)$ des Monitors M für x=o dargestellt.

Wie aus Fig. 3a und 3b zu ersehen ist, erzeugen die übertragenen Signale nach Wiedergabe auf dem Monitorschirm und nach Gewichtung mit der Modulationsübertragungsfunktion $H_M(f^x,f^y)$ des Monitors zusätzliche störende Effekte durch Komponenten höherer Ordnung. Beide Effekte ergeben eine Verschlechterung der vertikalen Auflösung und können summarisch durch einen Kell-Faktor von K≈0,64 ausgedrückt werden.

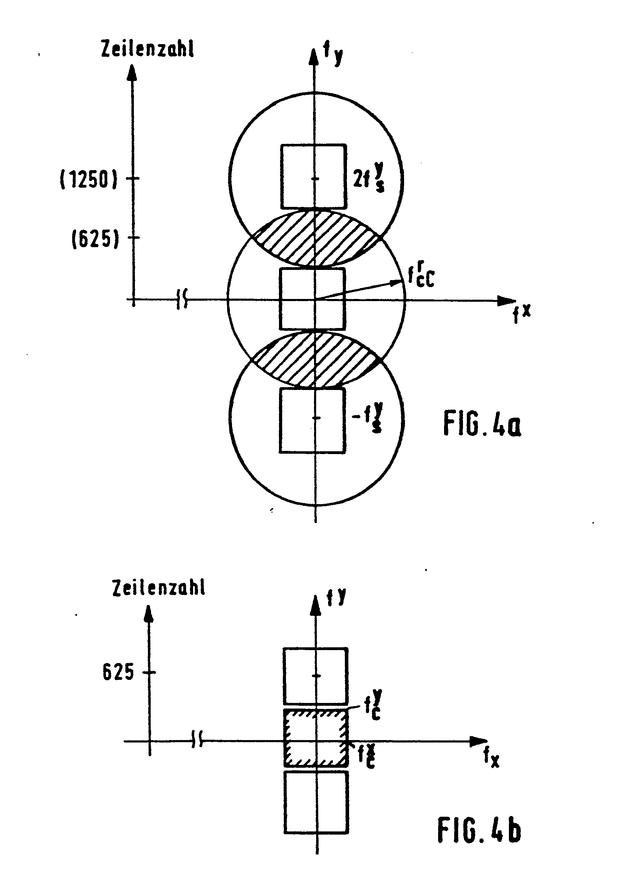

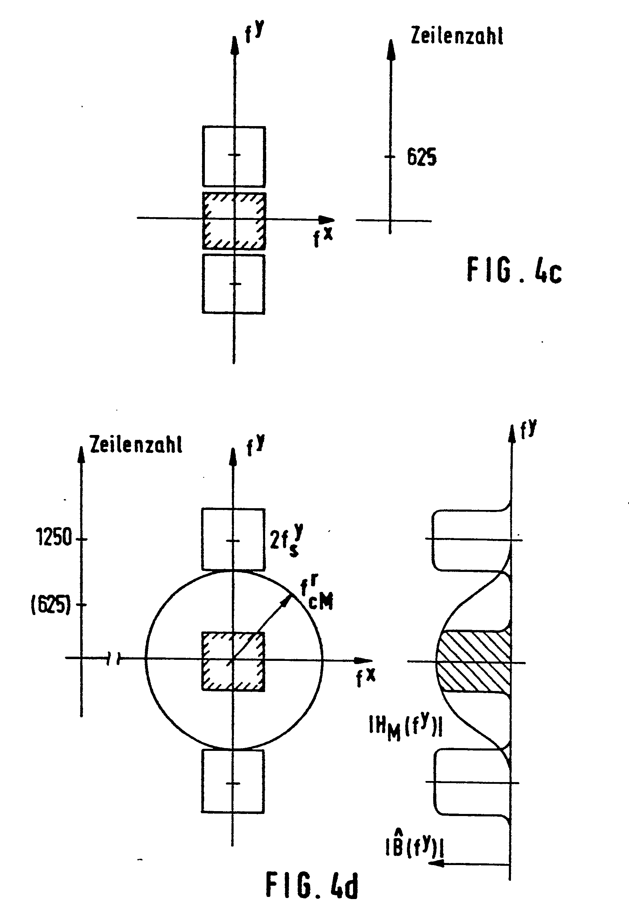

In Fig. 4a ist das Fourierspektrum B($f^x,f^y$) für ein Kameraausgangssignal b(t) dargestellt, für eine Kamera mit erhöhter Zeilenzahl von 1250 Zeilen pro Bild. Für eine vorgegebene zirkulare Grenzfrequenz $f^c_{cc}$ gibt es "Aliasing", dargestellt durch die schraffierten Bereiche. Mit einer höheren Abtastfrequenz von 2 · $f^y_s$ und dem weiteren Frequenzabstand 2 · $f^y_s$ zwischen den periodischen Spektren ist es mit Hilfe von digitaler Filtertechnik für die Vertikalrichtung möglich, die in Fig. 4a gezeigten quadratisch bandbegrenzten Spektralgebiete zu erhalten.

Bei einer vertikalen Grenzfrequenz von $f^y_c≤0,5f^y_s$ gewinnt man "aliasing"-freie Signale auch für die halbe Zeilenzahl (625 Zeilen).

Durch Abtastumwandlung ist eine Übertragung mit 625 Zeilen möglich, wie das in Fig. 4a gezeigt ist.

Nach digitaler oder günstig gewählter analoger Übertragung kann aus dem in Fig. 4c dargestellten Empfangssignal das Signal b(t) rekonstruiert werden. Sein Fourierspektrum B($f^x,f^y$) ist in Fig. 4d dargestellt. Das bandbegrenzte periodische Spektrum besitzt wieder eine Periodizität von $2f^y_s$ mit einer Grenzfrequenz für das Grundspektrum von

$$f^y_c≤\tfrac{1}{2} \cdot f^y_s=\tfrac{1}{4} \cdot 2 \cdot f^y_s.$$

4

Die große Frequenzlücke zwischen

$$f_c^y = \frac{1}{2} \cdot f_s^y \leq f^y \leq \frac{3}{2} \cdot f_s^y \qquad (7)$$

kann nun für die Modulationsübertragungsfunktion $H_M(f^x, f^y)$ benutzt werden.

Wie in Fig. 4d dargestellt, wird dabei eine zirkulare Grenzfrequenz $f_{cM}^r$ des Monitors angenommen. Durch geeignete Anpassung der Modulationsübergangsfunktion $H_M(f^x, f^y)$ an das Abtastschema mit hoher Zeilenfrequenz erhält man eine zeilenfreie Wiedergabe. Dabei ist es selbstverständlich möglich, die Modulationsübertragungsfunktion des visuellen Systems des Betrachters in $H_M(f^x, f^y)$ mit einzurechnen, um so die sich ergebende weitere Absenkung der benachbarten Spektralgebiete mit zu erfassen. Darüberhinaus ist es möglich, für eine Normzeilenzahl von z.B. 625 Zeilen eine optimale Modulationsübertragungsfunktion in vertikaler Richtung zu erhalten ohne "Aliasing"-Komponenten.

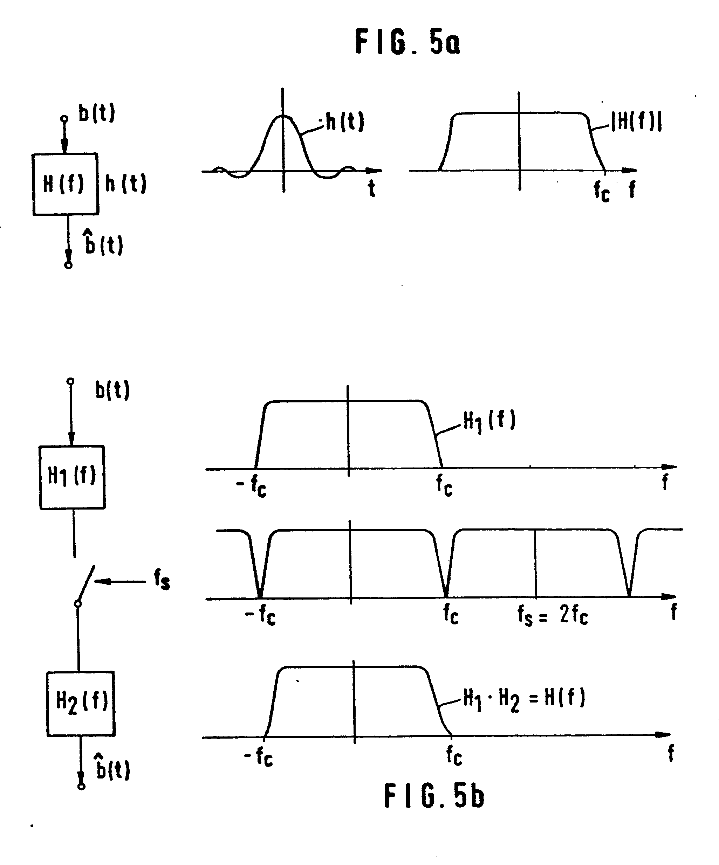

Zur Untersuchung dieser optimalen Übergangsfunktion betrachten wir ein geeignet gewähltes Netzwerk mit einer Übertragungsfunktion H(f) und einer Impulsantwort h(t) · h(t) soll dabei optimal im Sinne des Bildübertragungssystems sein, wie dies beispielsweise in der Veröffentlichung "Verbesserung der Bildschärfe eines bandbegrenzten Fernsehsignals durch lineare Maßnahmen" (a.a.O.) gezeigt ist. Das bedeutet, daß für eine vorgegebene Bandbreite mit der Grenzfrequenz fc die Impulsantwort h(t) minimale Anstiegszeit und zulässiges Ausschwingen aufweist. Die Übertragungsfunktion H(f) kann in zwei Anteile $H_1(f)$ und $H_2(f)$ aufgespalten werden, die beide gleiche Grenzfrequenzen $f_c$ aufweisen. Mit zwei geeignet gewählten Netzwerken mit den Übertragungsfunktionen $H_1(f)$ und $H_2(f)$ kann ein Abtastsystem aufgebaut werden, wie es in Fig. 5b gezeigt ist.

Das erste Netzwerk mit der Übertragungsfunktion $H_1(f)$ verhindert "Aliasing"-Komponenten für den Fall, daß die Abtastfrequenz fs folgendermaßen gewählt wird:

$$f_s \geq 2 \cdot f_c. \qquad (8)$$

Das erste Netzwerk nimmt die eigentliche Signalanhebung im beschriebenen Sinne vor. Da es nur einmal beim Sender benötigt wird, darf es relativ aufwendig sein.

Das zweite Netzwerk mit der Übertragungsfunktion $H_2(f)$ rekonstruiert das Ausgangssignal $\tilde{b}(t)$ aus den Abtastproben. Das zweite Netzwerk ist in vielen Empfängern vorhanden. Es wird daher sehr einfach gewählt und realisiert beispielsweise nur eine lineare Mittelwertbildung benachbarter Bildpunkte oder wiederholt sogar nur Bildpunkte aus der eng benachbarten Umgebung. Das Abtastsystem hat insgesamt die gewünschte optimale Übertragungsfunktion

$$H(f) = H_1(f) \cdot H_2(f). \qquad (9)$$

Das Eingangssignal b(t) wird deshalb ohne "Aliasing"-Komponenten in das Ausgangssignal b(t) transformiert. Diese optimale Übertragungsfunktion H(f) ist natürlich in jeder Richtung des Bildbereiches gültig. Deshalb ist es auch plausibel, daß $H(f^x)$ und $H(f^y)$ die gleiche Übertragungsfunktion MTF haben sollten.

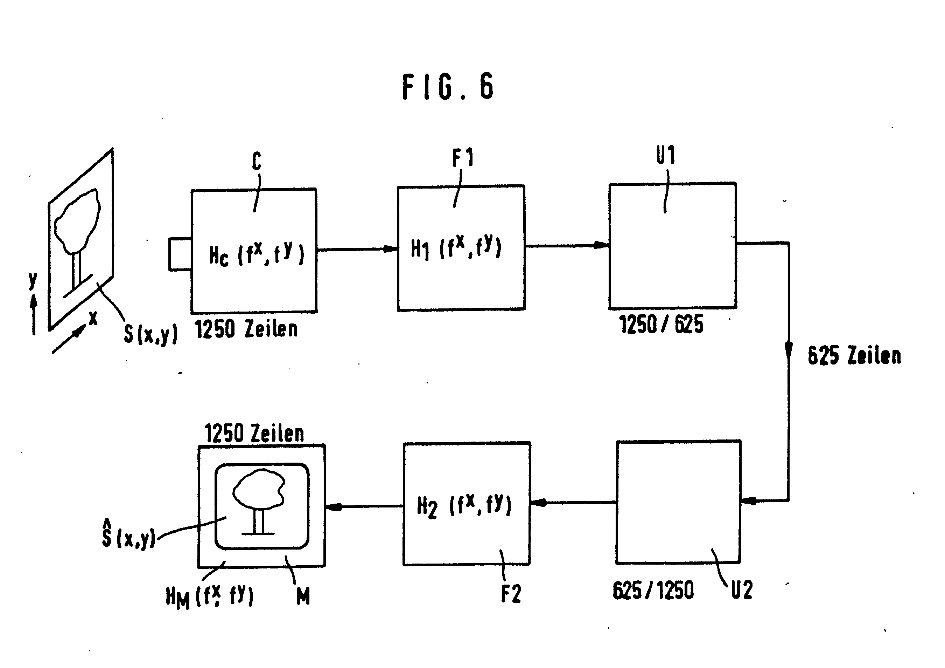

In Fig. 6 ist ein Bildübertragungssystem dargestellt mit zeilenfreier Wiedergabe. Senderseitig wird das Bildsignal der Videokamera C zuerst bandbegrenzt mittels eines Digitalfilters F1, dessen Übertragungsfunktion $H_1(f^x, f^y)$ ist, wobei gilt

$$H_1(f^x, f^y) = H_1(f^x) \cdot H_1(f^y) \qquad (10)$$

$H_1(f^x, f^y)$ ist die zweidimensionale Übertragungsfunktion des Vorfilters F1 mit einer Grenzfrequenz

$$f_{cc}^y \leq \tfrac{1}{2} \cdot f_s^y. \qquad (11)$$

Nach dieser Vorfilterung wird das Videosignal durch eine Abtastumwandlung im Abtastumwandler U1 in ein 625-Zeilen-Videosignal umgewandelt. Dieses kann auch mit Zeilensprung im Verhältnis 2:1 realisiert werden. Nach der Übertragung wird das Videosignal durch einen weiteren Abtastwandler U2 auf der Empfangsseite in ein 1250-Zeilen-Videosignal umgewandelt. Anschließend wird dieses Signal einem Nachfilterungsprozeß mit Interpolation unterzogen mittels Digitalfilter F2, dessen Übertragungsfunktion $H_2(f^x, f^y)$ gegeben ist durch

$$H_2(f^x, f^y) = H_2(f^x) \cdot H_2(f^y). \qquad (12)$$

Zuletzt wird das übertragene Signal mit der Modulationsübertragungsfunktion $H_M(f^x, f^y)$ des Monitors M gewichtet, um daraus die Leuchtdichtefunktion $\hat{s}(x, y)$ des Bildes zu rekonstruieren.

Für die gesamte Übertragungsfunktion gilt daher

$$H_{tot} = H_C(f^x, f^y) \cdot H_1(f^x) \cdot H_1(f^y) \cdot H_2(f^x) \cdot H_2(f^y). \cdot H_M(f^x, f^y). \qquad (13)$$

$H_C(f^x,f^y)$, und $H_M(f^x,f^y)$ können dabei näherungsweise vernachlässigt werden (oder durch $H_1$ bzw. $H_2$) einander angeglichen werden).

Deshalb gilt:

$$H_{tot}=H_1(f^x) \cdot H_2(f^x) \cdot H_1(f^y) \cdot H_2(f^y)$$
$$H_{tot}=H(f^x) \cdot H(f^y). \tag{14}$$

Dieses Ergebnis zeigt, daß eine optimale Übertragungsfunktion $H(f^x,f^y)$ mit gleichen Grenzfrequenzen $F_c^x=f_c^y$ in x- oder y-Richtung in zwei Teile aufgespalten werden kann, und daß durch geeignete Vor- und Nachfilterung die Abtastung mit

$$f_s^y=\frac{1}{d} = \frac{1}{2} \cdot f_c^y \tag{15}$$

erfolgen kann ohne "Aliasing"-Komponenten.

Durch geeignete Wiederherstellung mit "zeilenfreier" Wiedergabe auf dem Monitor M kann das bandbegrenzte Signal ohne Qualitätsverlust wiedergegeben werden. Werden außerdem noch Flimmereffekte vermieden (Vollbildabtastung ohne Zeilensprung auf dem Monitor), ergibt sich keine Verschlechterung der Vertikalauflösung (der Kell-Faktor K ist daher K=1).

Wie zuvor gezeigt wurde, kann die Vertikalauflösung durch "Aliasingfreie" Abtastung und "zeilenfreie" Wiedergabe um den Faktor $1/0{,}64\approx1{,}6$ erhöht werden. Es wird deshalb auch eine Erhöhung der Horizontalauflösung gefordert unter Beibehaltung der bestehenden Normen bzw. verfügbaren Bandbreiten. Wie im weiteren gezeigt wird, ist dies durch die bekannte Offsetabtastung in benachbarten Zeilen und durch synchrone Pulsübertragung im Luminanzkanal, beispielsweise in einem Übertragungssystem mit PAL-Codierung, möglich. Zur Vereinfachung wird hier nur der Luminanzkanal betrachtet mit optimaler Abtastung und Wiedergabe.

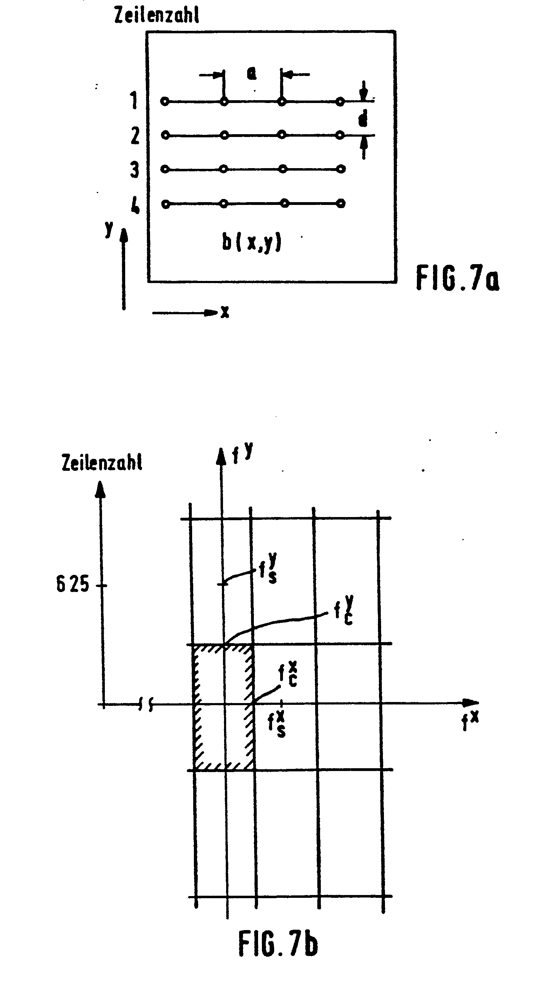

In Fig. 7a ist ein orthogonales Abtastschema für Videosignale mit Vollbildabtastung angegeben. Der Abtastabstand a in horizontaler Richtung hängt von der Abtastrate $f_x^x=1/a$ ab, wohingegen die vertikale Abtastrate $f_s^y=1/d$ vom Zeilenabstand d abhängt.

Die horizontale Abtastfrequenz für synchrone Übertragung von Abtastproben in Luminanzkanal eines PAL-codierten Systems ist, wie in der Veröffentlichung "Entwicklungsalternativen für zukünftige Fernseh-system" (a.a.O.) gezeigt wurde, ungefähr 8 MHz (was der Nyquistrate des Kanals entspricht). Für ein System mit 625 Zeilen/50 Hz führt dies zu einem Abtastabstand von etwa $a\approx2d$. Bei der Annahme von $a=2d$ erhält man die Abtastfrequenzen

$$f_s^y=\frac{1}{d}, \ f_s^x= \frac{1}{a} = \frac{1}{2} \cdot f_s^y. \tag{16}$$

Diese zweidimensionale Abtastung des Videosignals b(x,y) führt zu einem Fourierspektrum $B(f^x,f^y)$, welches in $f^x$- und $f^y$-Richtung periodisch ist mit der Periodizität $f_s^x$ bzw. $f_s^y$.

In Fig. 7b ist dieser Sachverhalt dargestellt. Bei definierter Bandbegrenzung mit

$$f_c^x \leq \tfrac{1}{2} \cdot f_s^x, \ f_c^y \leq \tfrac{1}{2} \cdot f_s^y \tag{17}$$

treten keine "Aliasing"-Komponenten auf. Durch einen geeigneten Nachfilterungsprozeß auf der Empfangsseite kann das Videosignal b(x,y) aus den übertragenen Abtastproben rekonstruiert werden. Die Wiederherstellung kann entweder mit Hilfe von Filtern erreicht werden, die in den Luminanzkanal des PAL-Coder/Decoder-Systems eines Standardempfängers eingefügt sind oder mit Hilfe von synchroner Wiederabtastung und Nachfilterung in einem speziellen Empfänger mit z.B. zeilenfreier Wiedergabe.

Wie aus Fig. 7b hervorgeht, ist die Vertikalauflösung gegeben durch $f_c^y$. Sie ist doppelt so groß wie die Horizontalauflösung.

Die schlechte Horizontalauflösung kann bei vorgegebener Norm verbessert werden durch die bekannte Offsetabtastung.

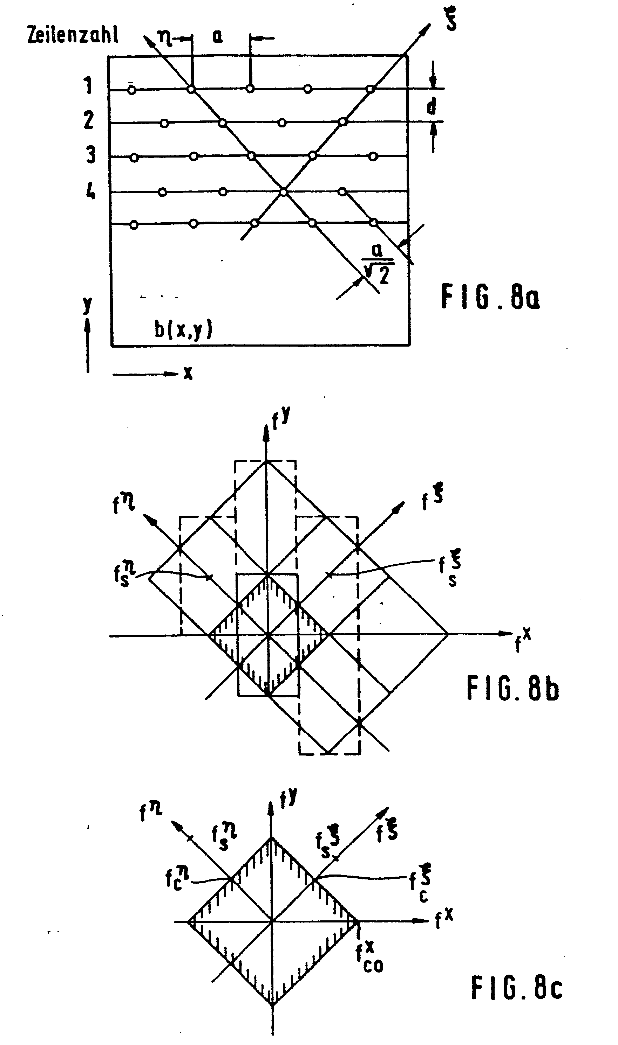

Das Abtastschema ist in Fig. 8a dargestellt. Mit den Abtastpunkten von benachbarten Zeilen in Offsetlage erhält man neue Achsen $\xi$ und $\eta$, die zueinander wieder orthogonal sind. Die Entfernungen zwischen den Abtastpunkten in $\xi$- und $\eta$-Richtung sind gleich und betragen $a/\sqrt{2}$.

Dies führt zu den Abtastfrequenzen

$$f_s^\xi=f_s^\eta=\sqrt{\frac{2}{a}}. \tag{18}$$

Mit günstig gewählten Bandbegrenzungen nach Fig. 8c

$$f_c^\xi = f_c^\eta \leq \tfrac{1}{2} \cdot f_s^\xi = \tfrac{1}{2} \cdot f_s^\eta \tag{19}$$

erhält man ein "aliasingfreies" Fourierspektrum.

Nach Fig. 8b existiert eine "aliasingfreie" Abtastung für entweder

$$f_c^x \leq \frac{1}{2} \cdot f_s^x = \frac{1}{2} \cdot \frac{1}{a} \tag{20}$$

oder

$$f_{co}^x \leq \sqrt{2} \cdot \frac{1}{2} \cdot f_s^\xi = \frac{1}{a} = 2 \cdot f_c^x. \tag{21}$$

Mit dieser Offset-Abtastung und mit der in Fig. 8c gezeigten Bandbegrenzung erhält man eine erhöhte Horizontalauflösung, die im betrachteten Falle genauso groß ist wie die Vertikalauflösung.

Aus Fig. 8c ist ersichtlich, daß die Auflösung in diagonaler Richtung etwa geringer ist als in horizontaler oder vertikaler Richtung. Diese unterschiedliche Auflösung wird aufgeglichen durch die Tatsache, daß die Wahrscheinlichkeitsdichte horizontaler oder vertikaler Konturen größer ist als die Wahrscheinlichkeitsdichte diagonaler Strukturen und das Auge weniger empfindlichist gegenüber diagonalen Strukturen.

Wie zuvor geschildert wurde kann eine "aliasingfreie" Abtastung mit einer Kamera erreicht werden, die eine höhere Zeilenzahl aufweist. Eine prinzipielle Darstellung dieses Konzepts wurde in Fig. 6 bereits erläutert.

Es wird im folgenden angenommen, daß das Digitalfilter F1 mit der Übertragungsfunktion $H_1(f^x,f^y)$ eine Diagonalstruktur mit den Grenzfrequenzen

$$f_c^\xi = f_c^\eta \leq \tfrac{1}{2} \cdot f_s^\xi = \sqrt{2}/a \tag{22}$$

aufweist.

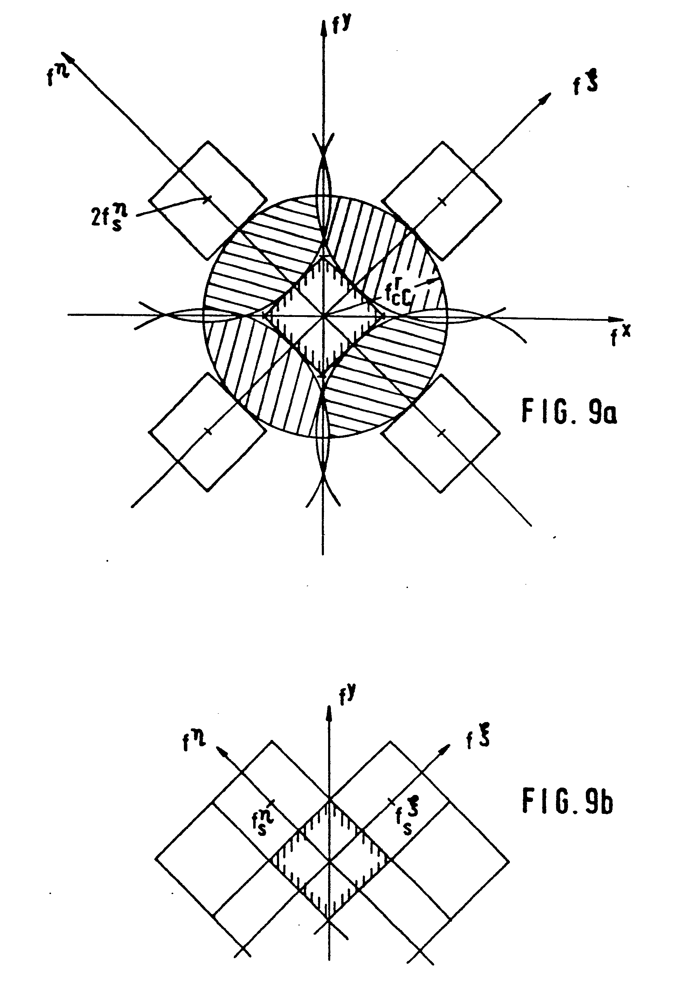

Unter dieser Voraussetzung und mit den Abtastfrequenzen $2f_s^\xi$, $2f_s^\eta$ in $\xi$- und $\eta$-Richtung erhält man daz zweidimensionale Fourierspektrum, wie es in Fig. 9a dargestellt ist. Die bandbreitenbegrenzten periodischen Bereiche weisen in Bezug auf das Zentrum Abstände von $2f_s^\xi$ bzw. $2f_s^\eta$ auf.

Aufgrund der Lücken in der Frequenzebene und der zirkularen Bandbegrenzung der Kamera mit der Grenzfrequenz $f_{cc}^r$ befinden sich die Überlappungsgebiete mit ihren "Aliasing"-Komponenten außerhalb der quadratischen Bereiche des gewünschten Videosignals.

Nach dem planaren Vorfilterungsprozeß des Videosignals wird durch die Abtastumsetzung jeder zweite Bildpunkt des Punktrasters und jede zweite Zeile ausgelassen, wie das in Fig. 9b dargestellt ist. Man erhält dadurch ein abgetastetes Videosignal in der 625 Zeilennorm ohne "Aliasing" und einer optimalen spektralen Erstreckung in $\xi$- und $\eta$-Richtung.

Empfangsseitig erhält man ein Signal, wie es in Fig. 9c dargestellt ist.

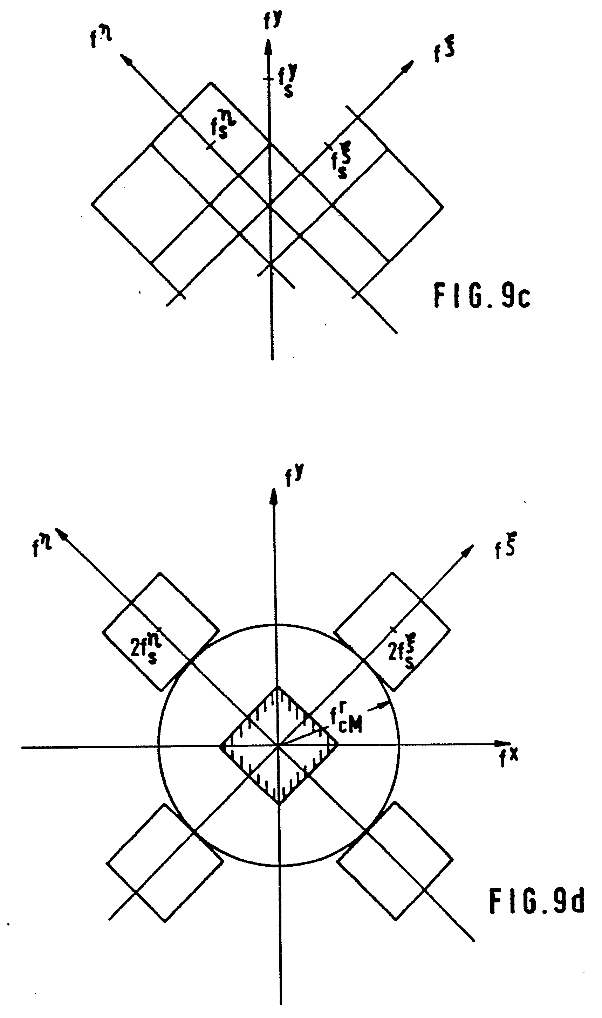

Durch Abtastumsetzung in U2 in Verbindung mit einem passenden Nachfilterungsprozeß mittels Digitalfilter F2 mit der Übertragungsfunktion $H_2(f^x,f^y)$ erhält man das in Fig. 9d dargestellte Spektrum, welches auch wider große Frequenzlücken zwischen den periodischen Bereichen des gewünschten Signals aufweist.

Mit der Modulationsübertragungsfunktion $H_M(f^x,f^y)$ des Monitors M mit der zirkularen Grenzfrequenz $f_{cM}^r$ erhält man das Grundspektrum und eine zeilenfreie Wiedergabe auf dem Monitorschirm.

Im folgenden werden die planaren Digitalfilter F1 und F2 näher beschrieben.

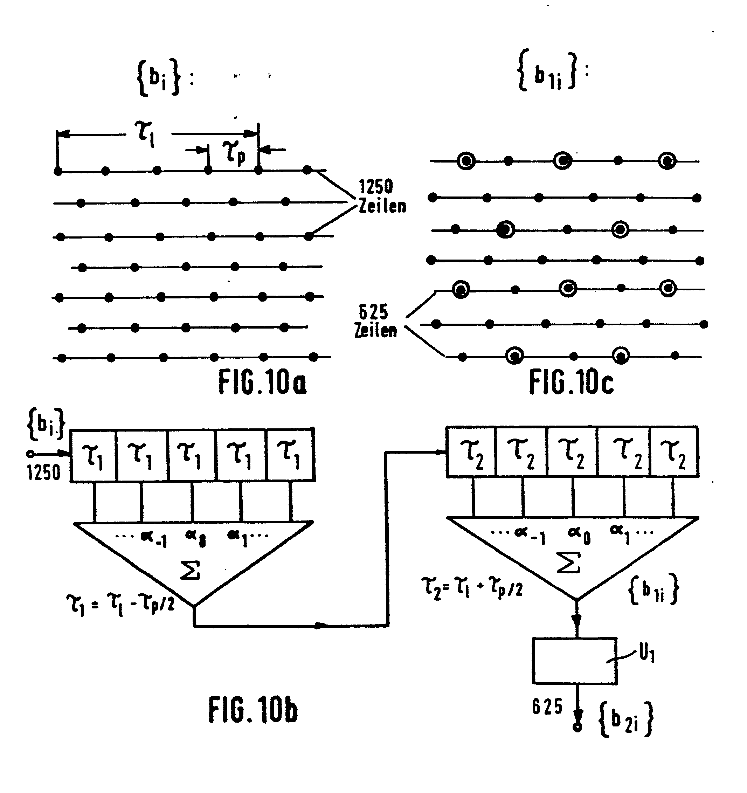

Fig. 10 zeigt eine mögliche Struktur zur Realisierung dieser zweidimensionalen digitalen Filter. Da die Grenzfrequenzen voneinander unabhängig sind

$$\begin{aligned} f_c^\xi(\xi,\eta) &= f_c^\xi \neq f(\eta) \\ f_c^\eta(\xi,\eta) &= f_c^\eta \neq f(\xi) \end{aligned} \tag{23}$$

kann die Übertragungsfunktion $H_1(f^\xi,f^\eta)$ in zwei Anteile

$$H_1(f^\xi), \ H_1(f^\eta)$$

aufgespalten und durch zwei eindimensionale hintereinander geschaltete Filter in Tandem realisiert werden.

In Fig. 10 ist dies für das Vorfilter F1 mit der Übertragungsfunktion $H_1(f^\xi,f^\eta)$ gezeigt. Die eingangsseitigen Abtastproben $\{b_i\}$ eines 1250 Zeilen Signals werden in das erste Transversalfilter eingelesen, dessen Ausgang mit dem zweiten Transversalfilter verbunden ist. Dies geschieht durch gleichmäßiges Einlesen der Zeilen in den Bildspeicher und durch anschließendes Auslesen halbbildweise im Zeilensprung.

Die Transversalfilter sind aus Verzögerungsleitungen mit den Laufzeiten $\tau_1$ und $\tau_2$ und den Summiernetzwerken mit Gewichtungskoeffizienten $a_v$. Für die Laufzeiten gilt

7

$$\tau_1 = \tau_1 - \tau_p/2$$

$$\tau_2 = \tau_1 + \tau_p/2$$

mit

$\tau_1$ = Zeilendauer

$\tau_p$ = Dauer zwischen zwei aufeinanderfolgenden Bildpunkten.

Durch günstig gewählte Gewichtungskoeffiziente $a_\nu$ realisieren diese Transversalfilter die gewünschten Übertragungsfunktionen $H_1(f^\xi)$ und $H_1(f^\eta)$ in $\xi$- und $\eta$-Richtung und führen zu den Ausgangsfolgen der Abtastproben $\{b_{1i}\}$. Dabei ergeben sich die Gewichtungskoeffizienten $a_\nu$ durch Transversalfilterapproximation nach allgemein bekannten Prinzipien, z.B. Fouriertransformation der beschriebenen Übertragungsfunktion $H_1(f^\xi)$ bzw. $H_1(f^\eta)$, die im Regelfall gleich sind und ebenfalls entsprechend den Ausführungen zur Auswahl einer optimalen Übertragungsfunktion im Sinne von Bildschärfe und Überschwingen gewählt sind.

Wegen der Bandgrenzen der quadratischen Bereiche in Fig. 9a kann die Dichte der Abtastproben reduziert werden. Bei Auswahl nur jedes zweiten Bildpunktes jeder zweiten Zeile durch den Abtastwandler U1 erhält man die $\{b_{2i}\}$ Folgen mit 625 Zeilen. Unter Verwendung eines Bildspeichers kann ein kompatibles Signal erzeugt werden durch Abtastung der $\{b_{1i}\}$ Folgen mit Zeilensprung.

Dieses modifiziert kompatible Signal $\{b_{2i}\}$ kann nun in digitaler Form oder in Form analoger Abtastproben im Luminanzkanal, beispielsweise in einem PAL-System übertragen werden.

Empfangsseitig können die Abtastproben rekonstruiert werden durch synchrone Wiederabtastung des analogen Signals im Luminanzkanal des PAL-Decoders.

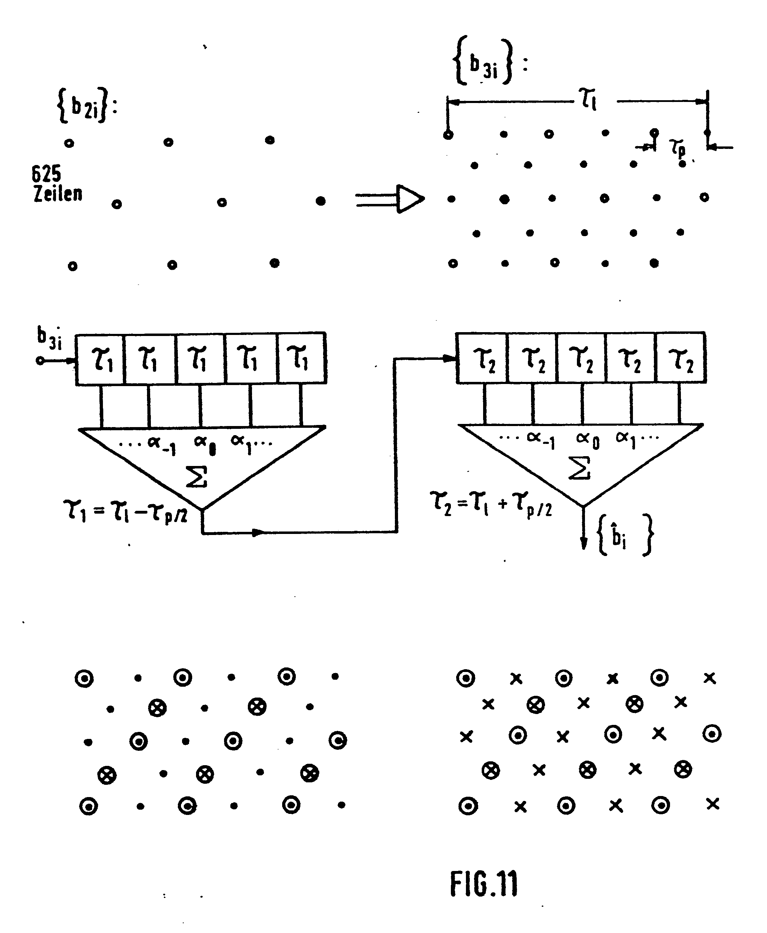

Aus diesen, wiederum mit Hilfe eines Bild-speicher wiederhergestellten Abtastproben $\{b_{2i}\}$, wie sie in Fig. 11 links oben gezeigt sind, werden durch den Abtastwandler U2 die Folgen $\{b_{3i}\}$ erzeugt.

In U2 werden Nullen eingefügt außer an den Plätzen, die durch $\{b_{2i}\}$ vorgegeben sind.

Die umgewandelten Folgen $\{b_{3i}\}$ werden dem Eingang des planaren transversalen Nachfilters F2 zugeführt.

Am Ausgang des Nachfilters F2, das ebenso aufgebaut ist wie F1, erhält man bei richtiger Wahl der Koeffizienten $a_i$ ein Signal im 1250 Zeilen Standard. Die Wahl der Koeffizienten $a_i$ erfolgt dabei derart, daß das Produkt der planaren Übertragungsfunktionen der sende- und empfangsseitigen Transversalfilter besonders günstig sind im beschriebenen Sinne von Bildschärfe und Überschwingen. Dabei kann das empfangsseitige Tranversalfilter mit den Koeffizienten $a_i$ wiederum eine sehr einfache beispielsweise linear interpolierende Wirkung haben oder eine die Punkte in der benachbarten Umgebung wiederholende Interpolation ausführen.

Durch Interpolation und Impulsformung in F2 (Vergleich von benachbarten Abtastwerten und Besetzung der Lückenplätze mit von den benachbarten Abtastwerten abgeleiteten Zwischenwerten) erhält man ein Signal $\{b_i\}$ mit hoher Bildpunktdichte. Das Signal $\{b_i\}$ ermöglicht "zeilenfreie" Wiedergabe des Bildsignalinhalts durch zirkulare Bandbegrenzung des auf dem Monitor M wiedergegebenen Bildpunktes.

## Patentansprüche

1. Verfahren zum Übertragen von Fernsehsignalen über einen genormten bandbreitebegrenzten Übertragungskanal, wobei sendeseitig eine zeilenweise Bildabtastung mit doppelter Normzeilenzahl erfolgt, wobei das abgetastete Signal digital vertikal signalanhebend vorgefiltert wird, wobei vor der Weitergabe an den Übertragungskanal eine Abtastung zur Bildung eines Zeilensprungssignals vorgenommen wird, und wobei empfangsseitig eine digitale vertikale signalanhebende Nachfilterung und eine Wiedergabe auf dem Empfangsmonitor erfolgt, gekennzeichnet durch die Kombination folgender Merkmale:

— die digital vertikal signalanhebende Vorfilterung erfolgt mit einer Bandbegrenzung entsprechend der Normzeilenzahl,

— vor der Weitergabe an den Übertragungskanal erfolgt eine Abtastumwandlung in Normzeilenzahl mit Zeilensprung, wobei jede zweite Zeile ausgelassen wird,

— empfangsseitig erfolgt eine Abtastrückwandlung und eine Nachfilterung zur Rekonstruktion der ausgelassenen Zeilen durch Interpolation und Wiedergabe auf dem Empfangsmonitor mit erhöhter Zeilenzahl.

2. Verfahren nach Anspruch 1, dadurch gekennzeichnet,

— daß die senderseitige Bildabtastung und die empfangsseitige Wiedergabe mittels Punktraster in Offsetlage erfolgt,

— daß die senderseitige Vorfilterung mit einer planaren Bandbegrenzung entsprechend der Normzeilenzahl und der Übertragungsbandbreite erfolgt,

— daß bei der senderseitigen Abtastumwandlung zusätzlich jeder zweite Bildpunkt entsprechend dem Bildpunktraster in Offsetlage ausgelassen wird und

— das nach der empfangsseitigen Abtastrückwandlung die Nachfilterung zur Rekonstruktion der ausgelassenen Bildpunkte und Zeilen durch planare Interpolation erfolgt.

3. Verfahren nach Anspruch 1 oder 2, dadurch gekennzeichnet,
daß sendseitig eine zeilenweise Vollbildabtastung und empfangsseitig die Bildwiedergabe auf dem Empfangsmonitor in Vollbilddarstellung erfolgt.

4. Verfahren nach einem der Ansprüche 1 bis 3, dadurch gekennzeichnet,
daß die Übertragung im Übertragungskanal in analoger oder digitaler Form erfolgt.

5. Verfahren nach einem der Ansprüche 2 bis 4, dadurch gekennzeichnet,
daß für die Vor- bzw. Nachfilterung je zwei eindimensionale hintereinander geschaltete Transversalfilter verwendet werden.

6. Schaltungsanordnung zum Durchführen des Verfahrens nach Anspruch 5, dadurch gekennzeichnet,

— daß das eingangsseitige Transversalfilter besteht aus
— Verzögerungsleitungen mit der Laufzeit $\tau_1$, wobei gilt

$$\tau_1 = \tau_1 - \tau_p/2$$

mit
$\tau_1$ = Zeichendauer,
$\tau_p$ = Dauer zwischen zwei aufeinanderfolgenden Bildpunkten

— einem Summiernetzwerk mit Gewichtungskoeffizienten, die der Systemübertragungsfunktion angepaßt sind,
— daß das ausgangsseitige Transversalfilter besteht aus
— Verzögerungsleitungen mit der Laufzeit $\tau_2$, wobei gilt

$$\tau_2 = \tau_1 - \tau_p/2$$

mit
$\tau_1$ = Zeilendauer,
$_p$ = Dauer zwischen zwei aufeinanderfolgenden Bildpunkten

— einem Summiernetzwerk mit Gewichtungskoeffizienten, die der Systemübertragungsfunktion angepaßt sind.

## Revendications

1. Procédé pour la transmission de signaux de télévision sur un canal de transmission normalisé et à largeur de bande limitée, avec à l'émission un balayage ligne par ligne de l'image avec une définition double de la définition normalisée, un préfiltrage numérique du signal échantillonné produisant une accentuation verticale dudit signal, un échantillonnage produisant un signal d'entrelacement avant l'application au canal de transmission et, à la réception un post-filtrage numérique d'accentuation du signal et une synthèse sur le moniteur de réception, ledit procédé étant caractérisé en ce que:

— le préfiltrage numérique d'accentuation verticale du signal s'effectue avec une limitation de la largeur de bande correspondant à la définition normalisée;
— avant l'application au canal de transmission, une conversion d'échantillonnage est effectuée à la définition normalisée avec entrelacement, une ligne sur deux étant omise; et
— à la réception, une reconversion d'échantillonnage est effectuée, ainsi qu'un post-filtrage pour reconstitution des lignes omises par interpolation et synthèse sur le moniteur de réception à définition supérieure.

2. Procédé selon la revendication 1, caractérisé en ce que:

— le balayage de l'image à l'émission et la synthèse à la réception s'effectuent à l'aide de trames de points en position d'offset;
— le préfiltrage à l'émission s'effectue avec une limitation plane de la largeur de bande, conformément à la définition normalisée et à la largeur de bande de transmission;
— lors de la conversion d'échantillonnage à l'émission, un point d'image sur deux est omis sur la trame de points d'image en position d'offset; et
— après la reconversion d'échantillonnage à la réception, le post-filtrage de reconstitution des points d'image et lignes omis s'effectue par interpolation plane.

3. Procédé selon une des revendications 1 ou 2, caractérisé par un balayage ligne par ligne de l'image complète à l'émission et par la synthèse de l'image complète sur le monitor de réception.

4. Procédé selon une quelconque des revendications 1 à 3, caractérisé en ce que la transmission s'effectue sous forme analogique ou numérique sur le canal de transmission.

9

**0 057 826**

5. Procédé selon une quelconque de revendication 2 à 4, caractérisé par l'emploi de deux filtres transversaux unidimensionnels en série pour le préfiltrage et le post-filtrage respectivement.

6. Dispositif pour la mise en ouvre du procédé selon revendication 5, caractérisé en ce que

— le filtre transversal d'entrée est constitué par:
— des lignes de retard à temps de propagation

$$\tau_1 = \tau_1 - \tau_p/2$$

avec:

$\tau_1$ = durée d'un caractère
$\tau_p$ = durée entre deux points d'image successifs

— un réseau sommateur à coefficients de pondération adaptés à la fonction de transfert du système;
et
— le filtre transversal de sortie est constitué par:
— des lignes de retard à temps de propagation

$$\tau_2 = \tau_1 - \tau_c/2$$

avec

$\tau_1$ = durée d'un caractère
$\tau_p$ = durée entre deux points d'image successifs

— un réseau sommateur à coefficients de pondération adaptés à la fonction de transfert du système.

**Claims**

1. Method for transmitting television signals over a standard, limited bandwidth transmission channel wherein, at the transmitting end, the picture is scanned line by line with twice the standard number of lines; the scanned signal is digitally, vertically and signal accentuatingly prefiltered; scanning to form a line interlace signal takes place before transfer to the transmission channel; and, at the receiving end, digital, vertical, signal accentuating post-filtering takes place as well as display on a receiving monitor, characterized by the combination of the following features:

— digital, vertical, signal accentuating prefiltering is effected with a bandwidth limitation corresponding to the standard number of lines;
— before transfer to the transmission channel, scanning is converted to the standard number of lines with line interlace, with every second line being omitted;
— at the receiving end, the scanning procedure is reconverted and postfiltering is effected to reconstruct the omitted lines by interpolation and the display on the receiving monitor is effected with an increased number of lines.

2. Method according to claim 1, characterized in that

— image scanning at the transmitting end and the display at the receiving end are effected by means of pixel rasters in offset position;
— prefiltering at the transmitting end is effected with planar bandwidth limitation corresponding to the standard number of lines and to the transmission bandwidth;
— during the conversion of scanning at the transmitting end, every second pixel corresponding to the pixel raster in offset position is additionally omitted; and
— after reconversion of the scanning at the receiving end, postfiltering to reconstruct the omitted pixels and lines is effected by planar interpolation.

3. Method according to claim 1 or 2, characterized in that, at the transmitting end, the full frame is scanned line by line, and at the receiving end, the picture is displayed as a full frame picture on the receiving monitor.

4. Method according to one of claims 1 to 3, characterized in that the transmission in the transmission channel is effected in analog or digital form.

5. Method according to one of claims 2 to 4, characterized in that two one-dimensional, series connected transversal filters are used for prefiltering and for postfiltering, respectively.

6. Circuit arrangement for implementing the method according to claim 5, characterized in that

— the transversel filter at the input is composed of:
— delay lines having a delay of $\tau_1$, according to the following equation:

10

$$\tau_1 = \tau_1 - \tau_p/2,$$

where

   $\tau_1$ = line duration
   $\tau_p$ = duration between two successive pixels;

— a summing network employing weighting coefficients which are adapted to the system transfer function:

— the transversal filter at the output is composed of:

— delay lines having a delay of $\tau_2$, according to the following equation:

$$\tau_2 = \tau_1 - \tau_p/2,$$

where

   $\tau_1$ = line duration
   $[\tau]_p$ = duration between two successive pixels;

— a summing network employing weighting coefficients which are adapted to the system transfer function.

FIG.1a

FIG.1b

Kamera:

Monitor:

0 057 826

FIG.2a

FIG.2b

FIG.2c

FIG.3a

FIG. 3b

FIG.4a

FIG.4b

FIG. 4c

FIG. 4d

# FIG. 5a

# FIG. 5b

FIG. 6

Zeilenzahl

b(x,y)

**FIG.7a**

Zeilenzahl

**FIG.7b**

FIG. 8a

FIG. 8b

FIG. 8c

FIG. 9a

FIG. 9b

FIG.9c

FIG.9d

$\{b_i\}$ :

$\{b_{1i}\}$ :

FIG.10a

FIG.10c

1250
Zeilen

625
Zeilen

$\tau_1$  $\tau_p$

$\{b_i\}$
1250

$\tau_1$ $\tau_1$ $\tau_1$ $\tau_1$ $\tau_1$

$\cdots \alpha_{-1}$ $\alpha_0$ $\alpha_1 \cdots$

$\Sigma$

$\tau_1 = \tau_l - \tau_{p/2}$

$\tau_2$ $\tau_2$ $\tau_2$ $\tau_2$ $\tau_2$

$\cdots \alpha_{-1}$ $\alpha_0$ $\alpha_1 \cdots$

$\Sigma$

$\tau_2 = \tau_l + \tau_{p/2}$  $\{b_{1i}\}$

$U_1$

625  $\{b_{2i}\}$

FIG.10b

FIG.11